(19) Europäisches Patentamt
European Patent Office
Office européen des brevets

(11) **EP 2 133 169 A2**

(12) **EUROPEAN PATENT APPLICATION**

(43) Date of publication:
**16.12.2009 Bulletin 2009/51**

(51) Int Cl.:
***B23K 26/04*** *(2006.01)*  ***B23K 26/08*** *(2006.01)*
***G05B 19/21*** *(2006.01)*  ***G05B 19/408*** *(2006.01)*
***G05D 3/20*** *(2006.01)*

(21) Application number: **09162241.5**

(22) Date of filing: **09.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.06.2008 JP 2008153727**

(71) Applicant: **Canon Kabushiki Kaisha Tokyo 146-8501 (JP)**

(72) Inventor: **Ueda, Shinji Tokyo 146-8501 (JP)**

(74) Representative: **TBK-Patent Bavariaring 4-6 80336 München (DE)**

(54) **Displacement detecting method, correction table making method, motor control apparatus, and processing machine**

(57) A displacement detecting method of the present invention includes the steps of driving a moving part (3) using a drive unit (1), detecting a displacement amount (6) (detected angle θm') of the moving part (3) using a displacement detector (5), correcting the displacement amount (6) (detected angle θm') using a displacement correction table so that a displacement velocity (dθm'/dt) of the displacement amount (6) (detected angle θm') detected by the displacement detector (5) is constant, and detecting a displacement amount (detected angle θm'') corrected by the displacement correction table as the displacement amount of the moving part (3).

FIG. 1

**Description**

BACKGROUND OF THE INVENTION

Field of the Invention

The present invention relates to a displacement detecting method, a correction table making method, a motor control apparatus, and a processing machine which correct displacement information to improve detection accuracy.

Description of the Related Art

The applicant is developing a galvano motor which is used for a processing machine such as a laser processing machine, a laser trimming machine, and a laser repair machine. An incremental encoder is adopted to the galvano motor as a highly accurate angle detector. The applicant is considering an electric dividing means of an encoder signal.

Conventionally, the electric division was performed on the assumption that two-phase analog sine wave signal and cosine wave signal which have the same values of the amplitude and offset and have the phases differing by 90 degrees from each other are outputted. The electric division might be performed after correcting the output signal from the encoder so that the output signal is close to the above assumption.

As an electric dividing method, a method of using a resistance division as disclosed in Japanese Patent Laid-Open No. H02-138819, and a method of using $\tan^{-1}$ (arc tangent) as disclosed in Japanese Patent Laid-Open No. H06-58769 are known.

As described above, conventionally, the corrections of the amplitude, the offset, and the phase were performed on the assumption that the output signal from the encoder is a sine wave signal. However, the encoder output signal contains a harmonic component and a nonlinear component, and it is not an ideal sine wave signal. Therefore, even if the encoder output signal is corrected, the signal after the correction is not an ideal sine wave signal to be exact. As a result, when performing the electric division, an error was caused.

Furthermore, a scale pitch of the encoder is processed so as to be arranged at equally-spaced intervals, but actually, a process error is generated.

SUMMARY OF THE INVENTION

The present invention provides a displacement detecting method, a motor control apparatus, and a processing machine, which correct a detection error caused by a harmonic component contained in an encoder output signal or a process error of a scale pitch to improve detection accuracy.

A displacement detecting method as one aspect of the present invention includes the steps of driving a moving part using a drive unit, detecting a displacement amount of the moving part using a displacement detector, correcting the displacement amount using a displacement correction table so that a displacement velocity of the displacement amount detected by the displacement detector is constant, and detecting a displacement amount corrected by the displacement correction table as the displacement amount of the moving part.

A method for making a correction table as another aspect of the present invention includes the steps of driving a moving part using a drive unit, detecting a displacement amount of the moving part using a displacement detector, calculating a displacement velocity of the displacement amount using a differentiator, and making a displacement correction table configured to correct the displacement amount so that the displacement velocity of the displacement amount detected by the displacement detector is constant.

A motor control apparatus as another aspect of the present invention includes a moving part, a drive unit configured to supply a drive torque to the moving part, a displacement detector configured to detect a displacement amount of the moving part, and a controller having a displacement correction table configured to correct the displacement amount so that a displacement velocity of the displacement amount detected by the displacement detector is constant. The controller controls the drive unit using a displacement amount corrected by the displacement correction table.

A processing machine as another aspect of the present invention includes the motor control apparatus.

Further features and aspects of the present invention will become apparent from the following description of exemplary embodiments with reference to the attached drawings.

BRIEF DESCRIPTION OF THE DRAWINGS

Fig. 1 is a block diagram of a control which is performed by a motor control apparatus in embodiment 1.

Fig. 2 is a diagram showing a relationship between a rotational angle detection error $\theta m'-\theta m$ of a motor and a rotational angle $\theta m$ of the motor in embodiment 1.

Fig. 3 is a diagram showing a relationship between a detected angle θm' of a motor and a rotational angle θm of the motor in embodiment 1.

Fig. 4 is an input waveform diagram of a drive torque in embodiment 1.

Fig. 5 is a diagram showing a time dependency of a detected angle θm' and a rotational velocity when a waveform shown in Fig. 4 is applied as a torque in embodiment 1.

Fig. 6 is a diagram showing a time dependency of a detected angle and a rotational velocity in one period of velocity unevenness in embodiment 1.

Fig. 7 is a diagram showing a state where a detected angle θm' shown in Fig. 6 is linearly approximated in embodiment 1.

Fig. 8 is a diagram showing a relationship between a detected angle θm" after the correction and a detected angle θm' before the correction in embodiment 1.

Fig. 9 is a diagram showing a relationship between a detection error θm'-θm before the correction and a detection error θm"-θm after the correction, and a rotational angle θm in embodiment 1.

Fig. 10 is a diagram showing a time dependency of a detected angle θm' and a rotational velocity when a waveform shown in Fig. 4 is applied as a torque in embodiment 2.

Fig. 11 is a diagram showing a time dependency of a detected angle and a rotational velocity in one period of velocity unevenness in embodiment 2.

Fig. 12 is a diagram showing a state where a detected angle θm' shown in Fig. 11 is linearly approximated in embodiment 2.

Fig. 13 is a diagram showing a relationship between a detected angle θm" after the correction and a detected angle θm' before the correction in embodiment 2.

Fig. 14 is a diagram showing a relationship between a detection error θm'-θm before the correction and a detection error θm" -θm after the correction, and a rotational angle θm in embodiment 2.

Fig. 15 is a diagram showing a relationship between a detected angle θm' of a motor and a rotational angle θm of the motor in embodiment 3.

Fig. 16 is a diagram showing a relationship between a rotational angle detection error θm'-θm of a motor and a rotational angle θm of the motor in embodiment 3.

Fig. 17 is an input waveform diagram of a drive torque in embodiment 3.

Fig. 18 is diagram showing a time dependency of a detected angle θm' and a rotational velocity when a waveform shown in Fig. 17 is applied as a torque in embodiment 3.

Fig. 19 is a diagram showing a time dependency of a detected angle and a rotational velocity during the time when velocity unevenness is generated in embodiment 3.

Fig. 20 is a diagram showing a state where a detected angle θm' shown in Fig. 19 is linearly approximated in embodiment 3.

Fig. 21 is a diagram showing a relationship between a detected angle θm" after the correction and a detected angle θm' before the correction in embodiment 3.

Fig. 22 is a diagram showing a relationship between a detected angle θm' before the correction and a detected angle θm" after the correction, and a rotational angle θm in embodiment 3.

Fig. 23 is a diagram showing a relationship between a detected angle θm' before the correction and a detected angle θm"' after the zero correction, and a rotational angle θm in embodiment 3.

Fig. 24 is a diagram showing a relationship between a detection error θm'-θm before the correction and a detection error θm"'-θm after the zero correction, and a rotational angle θm in embodiment 3.

Fig. 25 is a flowchart showing a correction procedure in embodiment 1.

Fig. 26 is a schematic diagram showing one example of a laser processing machine in the present embodiment.

Fig. 27 is a schematic diagram showing one example of a motor control apparatus in the present embodiment.

Fig. 28 is a plan view showing one example of a scale of a rotary encoder.

Fig. 29 is a diagram showing an output signal of an encoder.

DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

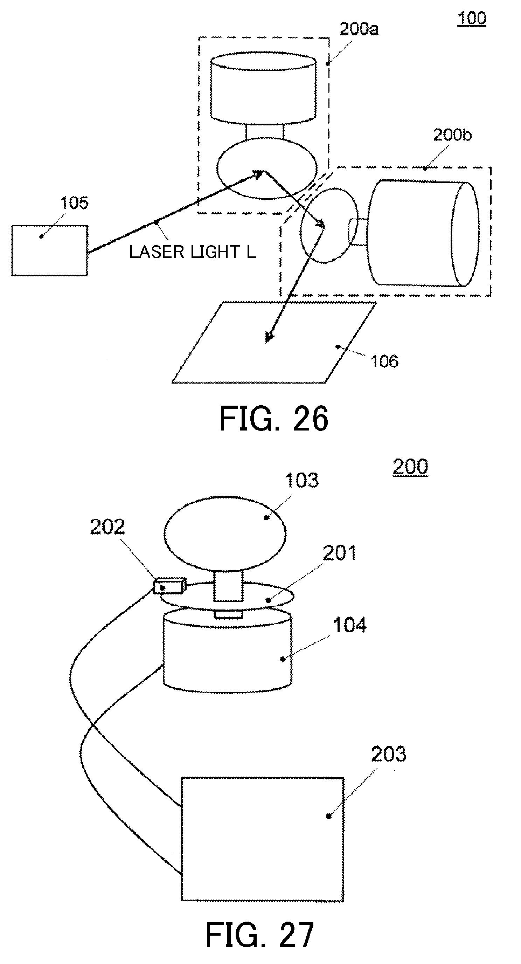

First, as one example of a processing machine in the present embodiment, the configuration of a laser processing machine will be described. Fig. 26 shows a schematic diagram of a laser processing machine 100. The laser processing machine 100 is used for a wide variety of applications such as cutting or drilling of a board, or welding metals.

The laser processing machine 100 of the present embodiment is provided with two motor control apparatuses 200a and 200b. Each of the motor control apparatuses 200a and 200b is provided with a mirror and a rotary motor. The rotary motor is provided so as to rotationally drive the mirror. The mirror is rotationally driven by the rotary motor so as to change its direction.

Thus, the laser processing machine 100 changes the direction of each mirror using the two rotary motors to be able to change a travelling direction of laser light L. As described later, the rotary motor is provided with an encoder for detecting its rotation displacement amount. The encoder is used for precisely detecting the rotation displacement amount of the rotary motor to be able to precisely control the travelling direction of the laser light L.

The laser light L emitted from a laser oscillator 105 is irradiated on a laser processed surface 106 via the mirrors of the motor control apparatus 200a and 200b. As a laser processed surface 106 to be processed, a wide range of materials such as a metal, a glass, or a plastic can be selected.

As described above, the laser processing machine 100 can precisely control the travelling direction of the laser light L by rotating the mirrors of the motor control apparatuses 200a and 200b. Therefore, even if the laser processed surface 106 is not flat, the laser processed surface 106 can be processed with high accuracy.

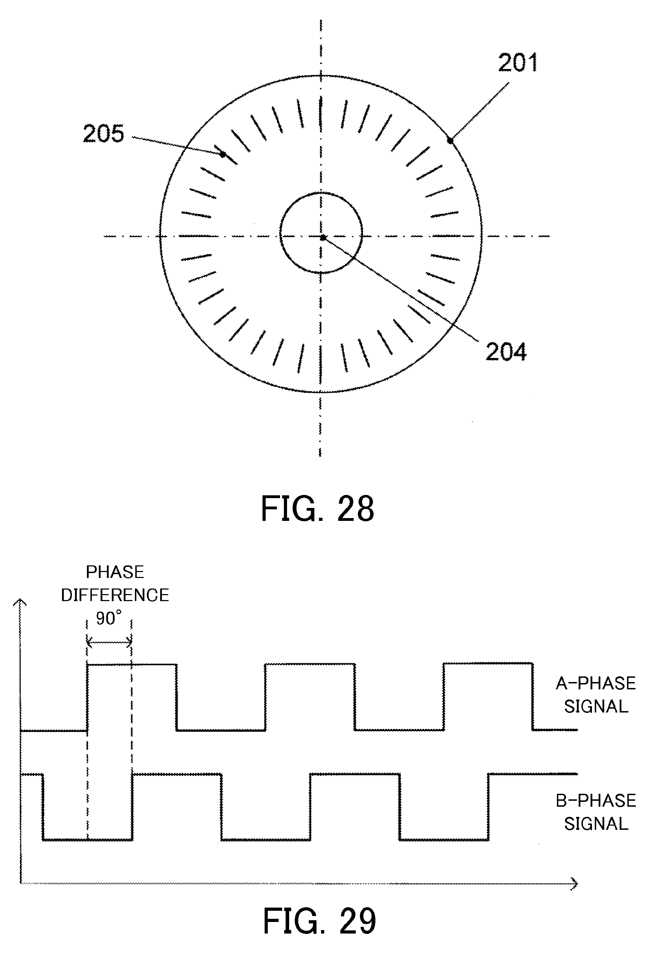

Next, a configuration of a motor control apparatus used for the laser processing machine 100 will be described. Fig. 27 is a schematic view of a motor control apparatus. Fig. 28 is a schematic plan view of a scale 201 of an encoder.

A motor control apparatus 200 of the present embodiment is provided with an optical encoder for detecting a rotation displacement amount of a rotary motor 104. The encoder is constituted by a scale 201 including a rotary slit disk and a fixed slit disk and a sensor unit 202 including a light emitting element (a light emitting diode) and a light receiving element (a photodiode). The rotary slit disk rotates in accordance with the rotation of the rotary motor 104, and the fixed slit disk is fixed. The encoder has a structure where the rotary slit disk and the fixed slit disk are arranged between the light emitting element and the light receiving element.

The rotary slit disk and the fixed slit disk are provided with a lot of slits. Light of the light emitting element transmits or is shielded in accordance with the rotation of the rotary slit disk. The fixed slit disk has a plurality of separated fixed slits in order to make an output signal of the encoder be a plurality of phases. Therefore, a plurality of light emitting elements and light receiving elements are also provided.

As shown in Fig. 28, the scale 201 of the encoder is provided with a plurality of slits 205. The scale 201 rotates around a scale center 204 (a rotary shaft) in accordance with a rotation displacement of the rotary motor 104. The sensor unit 202 is provided with two light receiving elements, each of which detects light when the light from the light emitting element passes through the slit 205. These two light receiving elements form two kinds of patterns of an A-phase pattern and a B-phase pattern, respectively, based on the light which has passed through the slit 205.

As a result, as shown in Fig. 29, an A-phase signal and a B-phase signal which have a phase difference by 90 degrees from each other are generated. The A-phase signal and the B-phase signal in Fig. 29 are square wave signals which are obtained by performing a waveform shaping of a sine wave encoder output by a waveform shaping circuit.

In Fig. 27, a motor controller 203 controls a rotational drive of the rotary motor 104. The motor controller 203 is provided with a drive unit which supplies a drive torque to the rotary motor 104 and a controller which controls the drive unit. The motor controller 203 compares a motor rotational angle that is a target value with a motor detected angle that is a measured value to perform a feedback control so that the measured value is equal to the target value. As a result, the direction of the mirror 103 can be changed to an angle which is equal to the target value.

The detection principle of an encoder is not limited to the optical one, but other types of encoders such as a magnetic encoder can also be adopted.

[Embodiment 1]

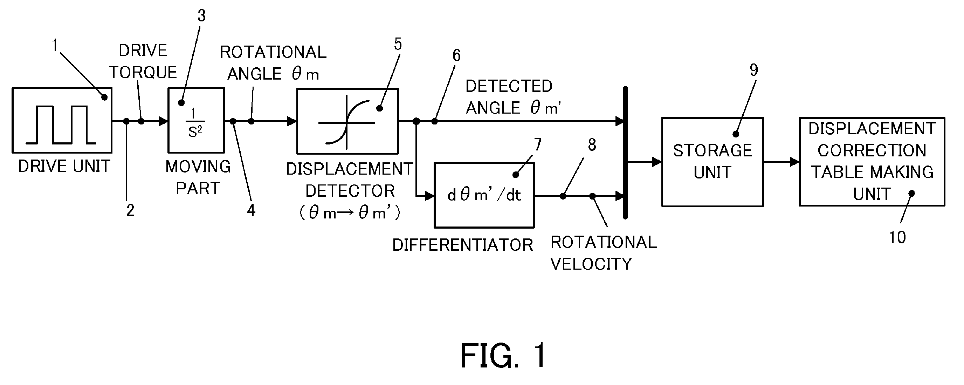

Next, a displacement detecting method and a motor control apparatus in embodiment 1 of the present invention will be described. Fig. 1 is a block diagram of a control which is performed by the motor control apparatus.

The control block in Fig. 1 is a positioning control system in which a rotary encoder is used as an angle detector for detecting a rotational angle θm of a motor. In Fig. 1, an easy model of a moving part in which position response with respect to a torque command is $1/s^2$ is shown.

Reference numeral 1 denotes a drive unit (a drive torque generator). The drive unit 1 supplies a predetermined torque 2 to a moving part 3 (a rotary motor) based on an output signal from an upper controller (not shown). The moving part 3 of the present embodiment represents position response which has a transfer function of $1/s^2$ with respect to the drive torque 2 (torque command) inputted from the drive unit 1.

The moving part 3 is displaced by a predetermined rotational angle when the drive torque 2 is inputted. In this case, a displacement amount 4 of the moving part 3, i.e. an actual rotational angle of the moving part 3 is defined as θm.

Reference numeral 5 denotes a displacement detector which detects the rotational angle θm (the displacement amount 4) of the moving part 3. As a displacement detector 5, for example an encoder is used, but it is not limited to this. The displacement detector 5 detects the displacement amount 4 of the moving part 3 to output the detected angle θm' (the displacement amount 6).

However, a signal (a sine wave signal) outputted from the displacement detector 5 contains a harmonic component or a nonlinear component. When an encoder is used as the displacement detector 5, a scale of the encoder may include a process error. Therefore, the detected angle θm' (the displacement amount 6) of the moving part 3 obtained by the displacement detector 5 strictly differs from the actual rotational angle θm (the displacement amount 4) of the moving part 3. In other words, there is an error between the actual rotational angle θm (the displacement amount 4) of the moving part 3 and the detected angle θm' (the displacement amount 6) of the moving part 3 detected by the displacement detector 5. In order to improve the detection accuracy of the displacement detector 5, as described later, the detected angle θm' (the displacement amount 6) needs to be corrected so that the error with respect to the detected angle θm' (the displacement amount 6) is reduced.

Reference numeral 7 denotes a differentiator which is provided to obtain a rotational velocity 8 (a displacement velocity) of the moving part 3. The differentiator 7 calculates a temporal differentiation value (dθm'/dt) of the detected angle θm' (the displacement amount 6) detected by the displacement detector 5. The temporal differentiation value calculated by the differentiator 7 corresponds to the rotational velocity 8 (the displacement velocity) of the moving part 3. Reference numeral 9 denotes a storage unit. The storage unit 9 stores the rotational angle θm' (the displacement amount 6) and the rotational velocity 8 calculated by the differentiator 7.

Reference numeral 10 denotes a displacement correction table making unit. The displacement correction table making unit 10 makes a displacement correction table from data (a rotational angle θm' (a displacement amount 6) and a rotational velocity 8) stored in the storage unit 9. The displacement correction table corrects the detected angle θm' (the displacement amount 6) detected by the displacement detector 5 so that the rotational velocity 8 (the displacement velocity) calculated by the differentiator 7 is constant. Thus, the displacement correction table performs a correction so that the detected angle θm' (the displacement amount 6) detected by the displacement detector 5 is equal to the actual rotational angle θm (the displacement amount 4) of the moving part 3. The displacement correction table is provided in a controller (not shown).

Next, a displacement detecting method in the present embodiment will be described in detail.

An error that an encoder signal containing a harmonic component causes to angle detection

First, in the present embodiment, an error that an encoder signal containing a harmonic component causes to angle detection will be described.

In the present embodiment, the encoder (the displacement detector 5) outputs each of two-phase sine wave signals by 140000 periods per one rotation of the rotary motor (the moving part 3). When the rotational angle of the rotary motor is defined as θm [rad], the phase angle θe [rad] of the encoder is represented as following expression (1).

$$\theta_e = 140000 \times \theta_m \qquad (1)$$

Two-phase signals Asig and Bsig of the encoder which outputs an ideal sine wave signal is obtained by following expressions (2) and (3).

$$Asig = \sin\left(\theta_e + \frac{\pi}{2}\right) \qquad (2)$$

$$Bsig = \sin\theta_e \qquad (3)$$

The two-phase signals Asig and Bsig of the encoder usually contain a harmonic component. Therefore, an encoder signal containing third-order and fifth-order harmonic components as represented by following expressions (4) and (5) will be considered.

5

$$Asig5 = \sin\left(\theta_e + \frac{\pi}{2}\right) + 0.05\sin 3\left(\theta_e + \frac{\pi}{2}\right) + 0.01\sin 5\left(\theta_e + \frac{\pi}{2}\right) \qquad (4)$$

$$Bsig5 = \sin\theta_e + 0.05\sin 3\theta_e + 0.01\sin 5\theta_e \qquad (5)$$

Next, the encoder signal containing a harmonic component is assumed to be an ideal sine wave signal, and an error generated when the electric division is performed by tan[-1] (arc tangent) is considered. In this case, using following expression (6), a phase angle θe' of the encoder can be obtained from the encoder signal containing the harmonic component.

$$\theta_e' = \tan^{-1}\left(\frac{Bsig5}{Asig5}\right) \qquad (6)$$

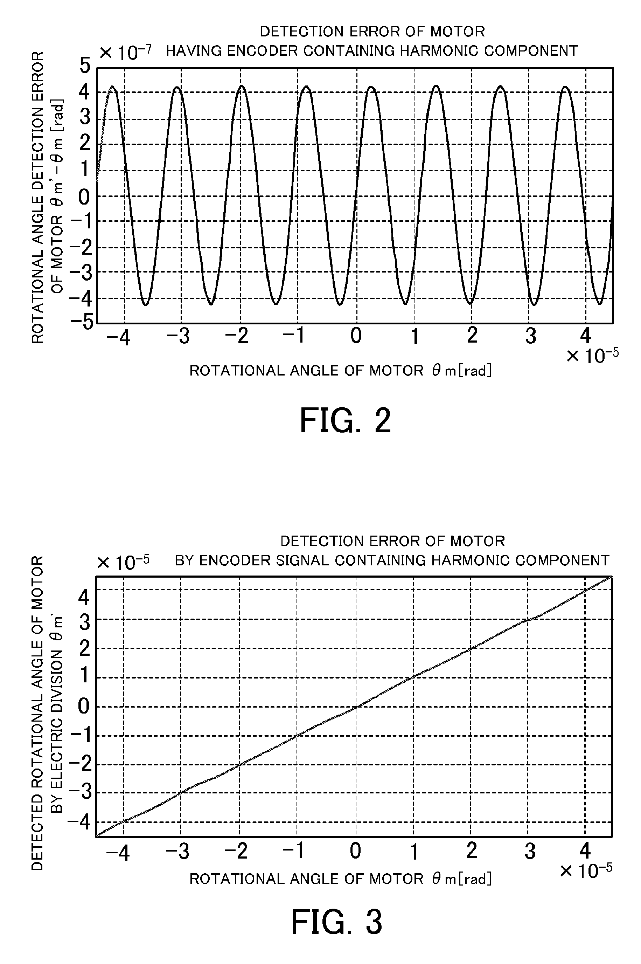

In the embodiment, the encoder signal has a periodic function, and therefore, the angle θe of the encoder can be considered in a range of $-\pi \le \theta e \le \pi$. In this case, as shown in Figs. 2 and 3, there is a detection error of the rotational angle of the moving part caused by the harmonic component.

Fig. 2 shows a relationship between a rotational angle detection error θm'-θm of a motor and a rotational angle θm of the motor. The horizontal axis represents a rotational angle θm of the motor (the moving part), and the vertical axis represents a detection error θm'-θm between the rotational angle θm of the motor and the detected angle θm' obtained by the electric division. As shown in Fig. 2, a motor control apparatus of the present embodiment contains a detection error θm'-θm which greatly periodically changes.

Fig. 3 shows a relationship between a detected angle θm' of the motor and the rotational angle θm of the motor. The horizontal axis represents a rotational angle θm of the motor and the vertical axis represents a rotational angle θm' calculated by the electric division. If any error which is caused by a harmonic component is not generated, the relation shown in Fig. 3 is represented by a straight line. However, in the present embodiment, because a harmonic component is contained, the relation shown in Fig. 3 is not represented by a straight line, but is represented by a distorted line.

A method for correcting angle detection

Next, a method for correcting angle detection in the present embodiment will be described. In the embodiment, a correction procedure will be described referring to a specific example.

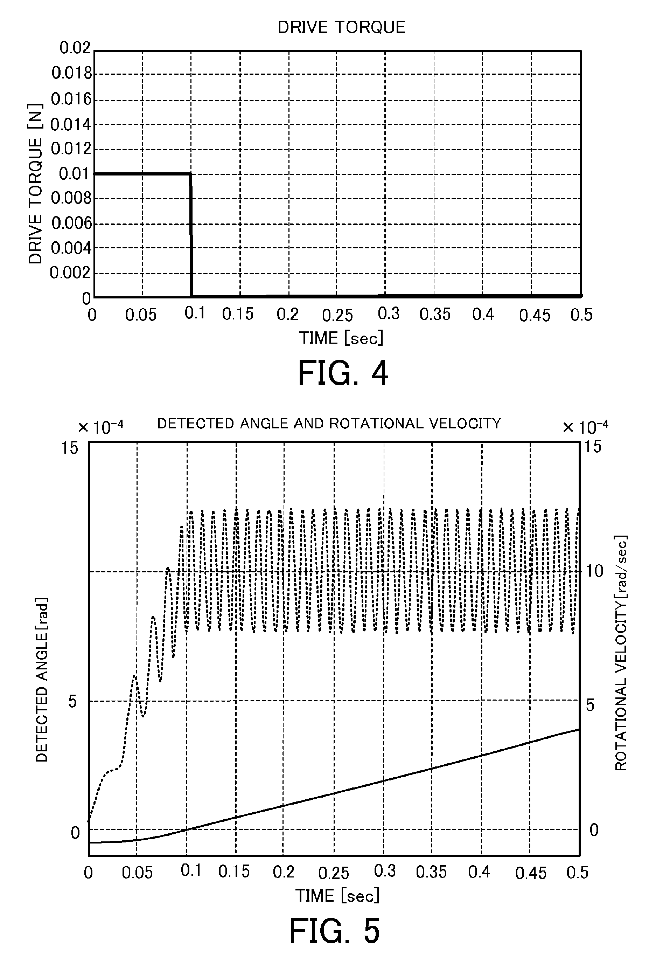

First, a torque is applied to the moving part (the motor) to drive the moving part. In the present embodiment, as a torque supplied to the moving part, the waveform shown in Fig. 4 is applied. Fig. 4 is an input waveform diagram of a drive torque in the present embodiment. As shown in Fig. 4, a drive torque of 0.01N is applied between 0 and 0.1 second.

Fig. 5 is a time dependency of a detected angle θm' and a rotational velocity when the waveform shown in Fig. 4 is applied as a torque. In Fig. 5, the detected angle θm' is represented by a solid line and the rotational velocity is represented by a dashed line. An initial position of the moving part is set to -2n/140000 [rad].

In Fig. 5, when focusing on the rotational velocity represented by a dashed line, the rotational velocity (the displacement velocity) after 0.1 second has periodic velocity unevenness. In other words, the rotational velocity repeats a high velocity and a low velocity with a short period. If a harmonic component is not contained in an encoder signal, the rotational velocity after 0.1 second becomes constant. However, because the harmonic component is contained in the encoder signal in the present embodiment, the rotational velocity has velocity unevenness during the time when the velocity is to be constant.

In the present embodiment, one period of the velocity unevenness is assumed to be between 100 [msec] and 111.56 [msec], and the detected angle is corrected so that the velocity unevenness during this time is equal to zero. The detected angle after the correction is defined as θm".

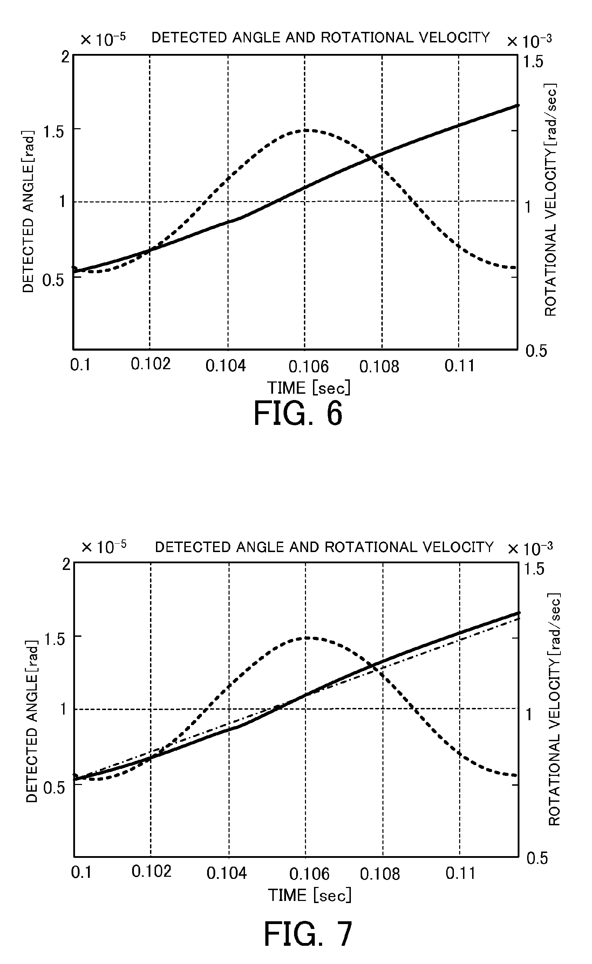

Fig. 6 is a time dependency of a detected angle θm' and a rotational velocity between 100 [msec] and 111.56 [msec] (one period of the velocity unevenness). In Fig. 6, the detected angle θm' is represented by a solid line and the rotational velocity is represented by a dashed line. In order that the velocity unevenness is equal to zero, in the present embodiment, a linear approximation for the time dependency of the detected angle θm' is performed during the time between 100 [msec] and 111.56 [msec] (one period of the velocity unevenness).

The linear approximation is performed by selecting two points in one period of the velocity unevenness that is a correction time and by calculating the tilt at the two points. For example, in the present embodiment, a temporal differentiation value (a tilt of a straight line) is calculated using two detected angles θm' at 100 [msec] that is a start time of the correction time and at 111.56 [msec] that is a finish time of the correction time.

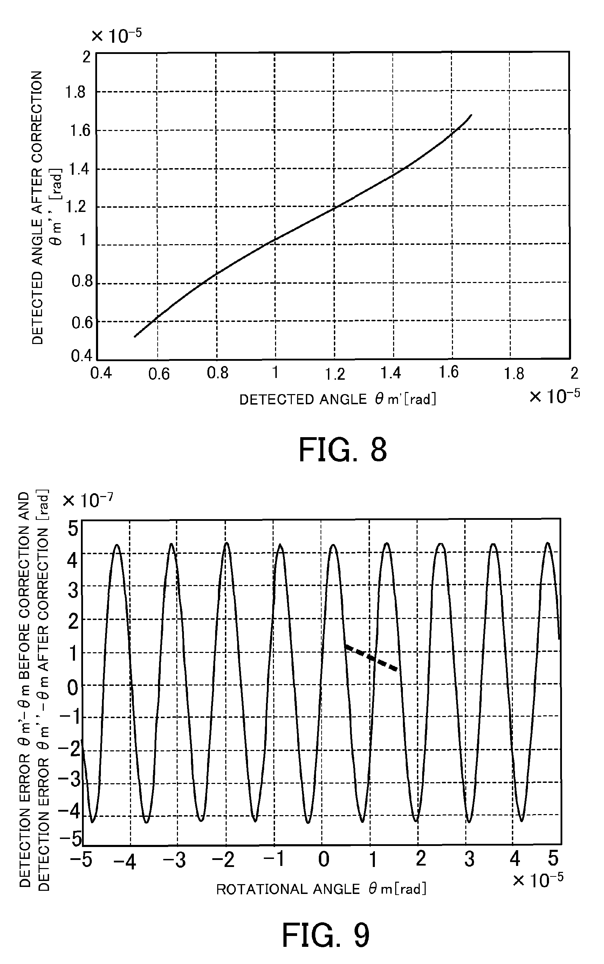

Fig. 7 shows a state by a dashed-dotted line where a detected angle θm' shown in Fig. 6 is linearly approximated. Thus, the relation between the detected angle θm' and the detected angle θm" after the correction obtained by the linear approximation can be obtained. This relation is shown in Fig. 8. The relation between the detected angle θm" and the detected angle θm' shown in Fig. 8 is maintained in the motor controller 203 (controller) of a motor control apparatus 200. Thus, the displacement correction table corrects the detected angle θm' (the displacement amount 6) so that the rotational velocity (the displacement velocity) is constant during at least one period of the velocity unevenness.

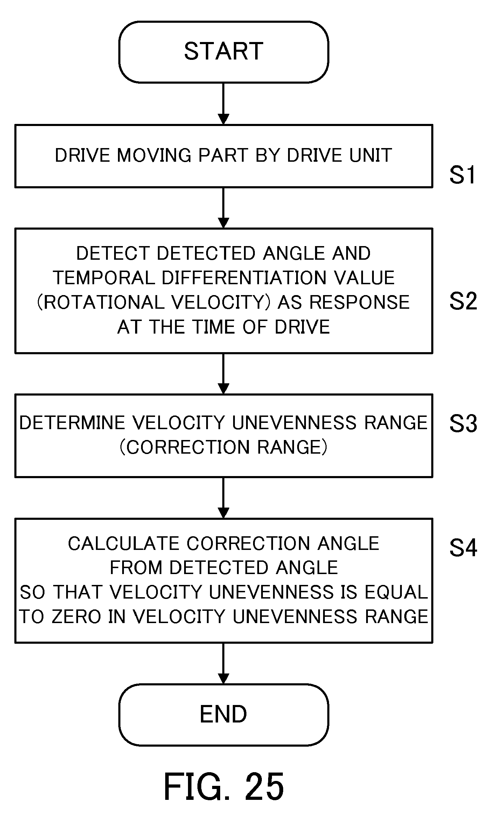

Next, the correction procedure in the present embodiment will be described. Fig. 25 is a flowchart showing a correction procedure (a method for making a displacement correction table) in the present embodiment.

First, at Step S1, the moving part 3 (motor) is driven using a drive unit 1 based on a command of an upper controller. Next, at Step S2, as a response in driving the motor, the detected angle θm' (the displacement amount 6) of the motor using the displacement detector 5 is detected. Furthermore, a temporal differentiation value (a displacement velocity) of the detected angle θm' (the displacement amount 6) is calculated using the differentiator 7.

At Step S3, the range of the velocity unevenness of the rotational velocity (the displacement velocity), i.e. correction range, is determined. The range of the velocity unevenness of the rotational velocity (the correction range) is appropriately determined in accordance with a kind of the moving part 3 (the motor) to be used, or the like.

At Step S4, the detected angle θm" after the correction is calculated from the detected angle θm' before the correction so that the velocity unevenness of the rotational velocity is equal to zero in the range of the velocity unevenness determined at Step S3. In other words, the detected angle θm' is corrected so that the temporal differentiation value (the displacement velocity) of the detected angle θm' (the displacement amount 6) is constant. The relation between the detected angle θm' before the correction and the detected angle θm" after the correction is maintained as a displacement correction table made by a displacement correction table making unit 10. The displacement correction table of the present embodiment is made as described above.

In the displacement detecting method of the present embodiment, the displacement amount (the detected angle θm") corrected using the displacement correction table is detected as a displacement amount 4 (a rotational angle θm) of the moving part 3. The correction procedure shown in Fig. 25 can also be applied to embodiments 2 and 3 described later.

A detection error before and after correcting the angle detection

Next, a detection error before and after correcting the angle detection in the present embodiment will be described.

Fig. 9 is a relationship between the detection error θm'-θm before the correction and the detection error θm"-θm after the correction, and the rotational angle θm. In Fig. 9, the horizontal axis represents the rotational angle θm of a motor and the vertical axis represents the detection error θm'-θm before the correction and the detection error θm"-θm after the correction. The solid line represents the detection error θm'-θm before the correction, and the dashed line represents the detection error θm"-θm after the correction.

As shown in Fig. 9, in the correction range in the present embodiment, the detection error of the detected angle θm" after the correction is greatly reduced, compared with the detected angle θm' before the correction. Therefore, according to the present embodiment, an ideal electric division can be performed.

As described above, according to the present embodiment, an angle detection error for the encoder signal containing a harmonic signal can be reduced. The correction method of the detected angle in the present embodiment is performed repeatedly by changing an initial position of a moving part (a motor). Therefore, the detected angle can be corrected in the wide range.

[Embodiment 2]

Next, embodiment 2 of the present invention will be described.

In the present embodiment, a model of a moving part where the position response for the torque command of the rotary motor is $1/(s^2+s+100)$ is considered. This model adds a model of a viscosity and a spring system to the model of embodiment 1. The model of the viscosity is reflected by "s" of the denominator in the above expression, and the model of the spring system is reflected by "100" of the denominator in the expression.

A method for correcting angle detection

First, a method for correcting angle detection in the present embodiment will be described.

Also in the present embodiment, the correction is performed by the same procedure as that of embodiment 1.

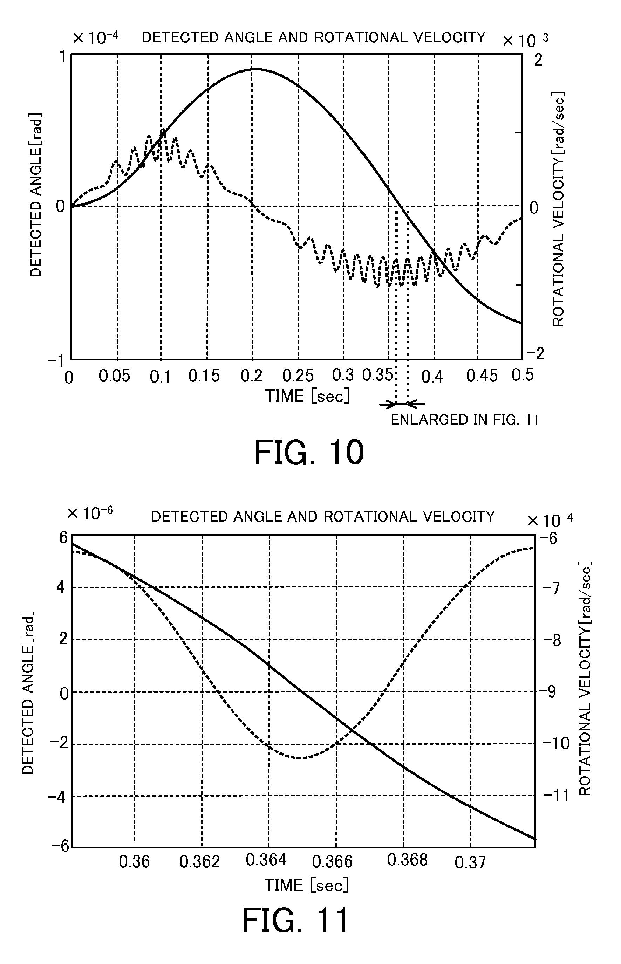

First, similarly to embodiment 1, the waveform shown in Fig. 4 is applied as a torque. The time dependency of the detected angle θm' and the rotational velocity (the temporal differentiation value) at this time is shown in Fig. 10. In Fig. 10, the detected angle θm' is represented by a solid line and the rotational velocity is represented by a dashed line.

In the present embodiment, the initial position of the moving part 3 (the motor) is set to 0 [rad].

In Fig. 10, when focusing on the rotational velocity, the rotational velocity during 0.3 to 0.4 second is nearly constant and has the velocity unevenness. Therefore, one period of the velocity unevenness is assumed to be from 358.16 [msec] to 371.89 [msec], and the detected angle θm" after the correction is obtained by correcting the detected angle θm' so that the velocity unevenness during this time is equal to zero.

Fig. 11 is a time dependency of the detected angle θm' and the rotational velocity (the temporal differentiation value) during the time from 358.16 [msec] to 371.89 [msec] (one period of the velocity unevenness). In Fig. 11, the detected angle θm' is represented by a solid line and the rotational velocity is represented by a dashed line. Fig. 11 corresponds to an enlarged view of a part of Fig. 10.

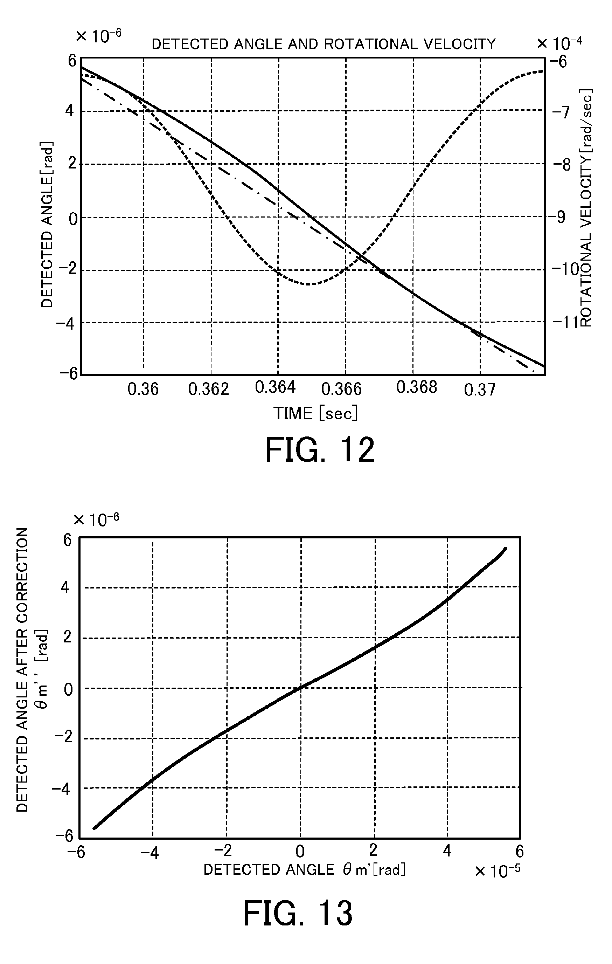

In order that the velocity unevenness of the rotational velocity is equal to zero, in the present embodiment, as shown in Fig. 12 by a dashed-dotted line, the detected angle θm' during the time from 358.16 [msec] to 371.89 [msec] is linearly approximated. Thus, the relation between the detected angle θm' before the correction and the detected angle θm" after the correction obtained by the linear approximation can be obtained. This relation is shown in Fig. 13.

The relation between the detected angle θm" after the correction and the detected angle θm' before the correction in Fig. 13 is maintained in the motor controller 203 of the motor control apparatus 200 as a displacement correction table. A detection error before and after correcting angle detection

Next, a detection error before and after correcting angle detection in the present embodiment will be described.

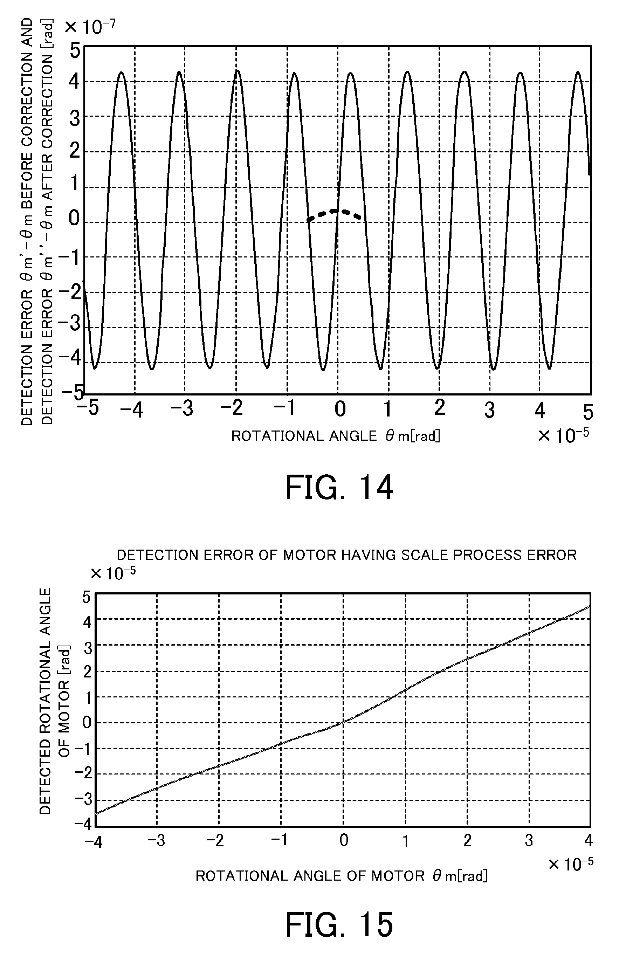

Fig. 14 is a diagram showing a relationship between the detection error θm'-θm before the correction and the detection error θm" -θm after the correction, and the rotational angle θm. In Fig. 14, the horizontal axis represents the rotational angle θm of a motor, and the vertical axis represents the detection error θm'-θm before the correction and the detection error θm" - θm after the correction. The solid line represents the detection error θm'-θm before the correction and the dashed line represents the detection error θm"-θm after the correction.

As shown in Fig. 14, the detection error of the detected angle θm" after the correction is greatly reduced compared with the detected angle θm' before the correction in the corrected range of the present embodiment. Therefore, according to the present embodiment, an ideal electric division can be performed.

As described above, according to the present embodiment, an angle detection error for the encoder signal containing a harmonic signal can be reduced. The correction method of the detected angle in the present embodiment is performed repeatedly by changing an initial position of a moving part (a motor). Therefore, the detected angle can be corrected in a wide range.

[Embodiment 3]

Next, embodiment 3 of the present invention will be described.

In the embodiment, the case where a process error in a scale pitch of an encoder is generated will be considered. Similarly to embodiments 1 and 2, a rotary motor is used as a moving part, and a rotary encoder (an angle detector) is used as a displacement detector. The encoder outputs a sine wave two-phase signal by 140000 periods per one rotation of a motor.

When the rotational angle of the motor is θm [rad], a phase angle θe [rad] of the encoder is represented by following expression (7).

$$\theta_e = 140000 \times \theta_m \qquad (7)$$

Two-phase sine wave signals Asig and Bsig of the encoder are represented by following expressions (8) and (9).

$$Asig = \sin\left(\theta_e + \frac{\pi}{2}\right) \qquad (8)$$

$$Bsig = \sin\theta_e \qquad (9)$$

However, when a process error in the scale pitch is generated, the relation of above expression (7) is not satisfied and a precise position can not be detected.

In the present embodiment, a detection correcting procedure in the case where a process error in a scale pitch is generated will be described.

An error that an encoder signal containing a scale process error provides in detecting an angle

First, an error that an encoder signal containing a scale process error provides in detecting an angle will be described. In the present embodiment, the scale of the encoder is configured so as to satisfy following expressions (10) and (11) with respect to a rotational angle of a motor.

When the range of the rotational angle of the motor is $(-\pi/140000)\times1.2\leq\theta m<0$, the phase angle $\theta e'$ [rad] of the encoder is represented by the following expression (10).

$$\theta_e' = \frac{\theta_m \times 140000}{1.2} \qquad (10)$$

When the range of the rotational angle of the motor is $0\leq\theta m<(\pi/140000)\times0.8$, the phase angle $\theta e'$ [rad] of the encoder is represented by the following expression (11).

$$\theta_e' = \frac{\theta_m \times 140000}{0.8} \qquad (11)$$

In this case, a process error which satisfies the relation of expressions (10) and (11) is generated in the scale of the encoder of the present embodiment. It is assumed that the process error is not generated in the range other than the above range. When it is assumed that the scale of the encoder is ideal one, the rotational angle $\theta m'$ of the motor is obtained by expression (12) using an encoder signal $\theta e'$.

$$\theta_m' = \frac{\theta_e'}{140000} \qquad (12)$$

Fig. 15 is a relationship between a detected angle $\theta m'$ of the motor and a rotational angle $\theta m$ of the motor in the present embodiment. In Fig. 15, the horizontal axis represents the rotational angle $\theta m$ of the motor and the vertical axis represents the motor rotational angle $\theta m'$ of the motor which has been obtained by the electric division.

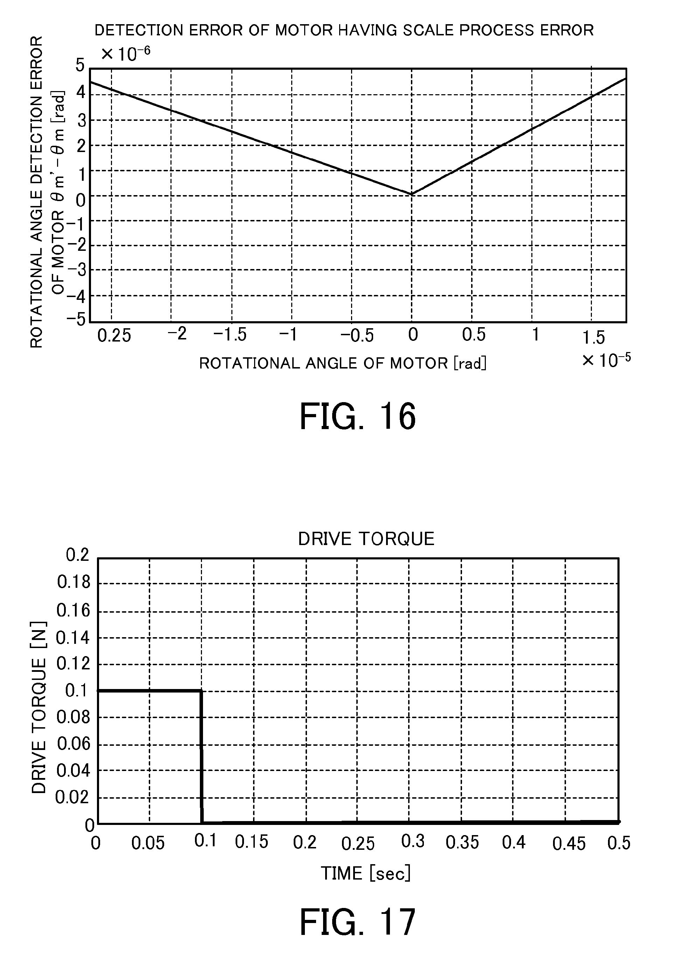

Fig. 16 is a relationship between a rotational angle detection error $\theta m'-\theta m$ of the motor and the rotational angle $\theta m$ of the motor in the present embodiment. In Fig. 16, the horizontal axis represents the rotational angle $\theta m$ of the motor and the vertical axis represents the detection error $\theta m'-\theta m$ between the rotational angle $\theta m$ of the motor and the motor rotational angle $\theta m'$ which has been obtained by the electric division.

As shown in Figs. 15 and 16, the encoder of the present embodiment contains an angle detection error caused by a scale process error.

A method for correcting angle detection

Next, a method for correcting angle detection in the present embodiment will be described.

The correction in the present embodiment is performed by the same procedure as that of embodiment 1. In the present embodiment, a waveform shown in Fig. 17 is applied as a drive torque. Fig. 17 is an input waveform view of the drive torque in the present embodiment. As shown in Fig. 17, the drive torque of 0.1N is applied during 0 to 0.1 second.

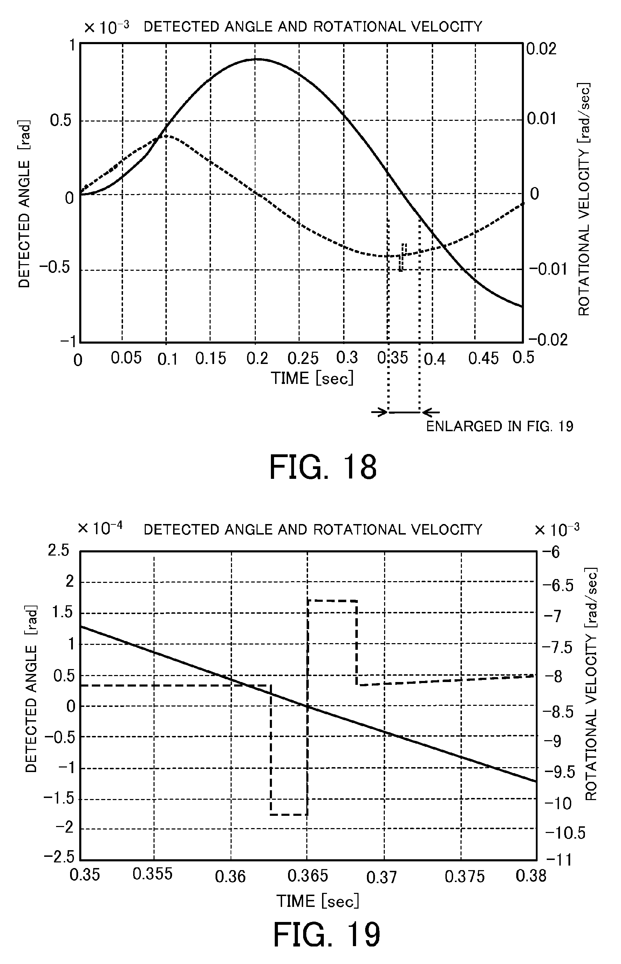

Fig. 18 is a view showing a time dependency of a detected angle θm' and a rotational velocity when applying the waveform shown in Fig. 17 as a torque in the present embodiment. In Fig. 18, the detected angle θm' is represented by a solid line and the rotational velocity is represented by a dashed line. The initial position of the moving part (the motor) is set to zero [rad].

When focusing on the rotational velocity in Fig. 18, the rotational velocity during the time of 0.35 to 0.38 second is nearly constant. However, the velocity unevenness is generated around 365 [msec]. Therefore, it is assumed that the range of the velocity unevenness is between 350 [msec] and 380 [msec], and the detected angle is corrected so that the velocity unevenness during this time is equal to zero to obtain the detected angle θm'' after the correction.

Fig. 19 is a view showing a time dependency of a detected angle θm' and a rotational velocity during the time when the velocity unevenness of the present embodiment is contained (during the time between 350 [msec] and 380 [msec]). In Fig. 19, the detected angle θm' is represented by a solid line and the rotational velocity is represented by a dashed line.

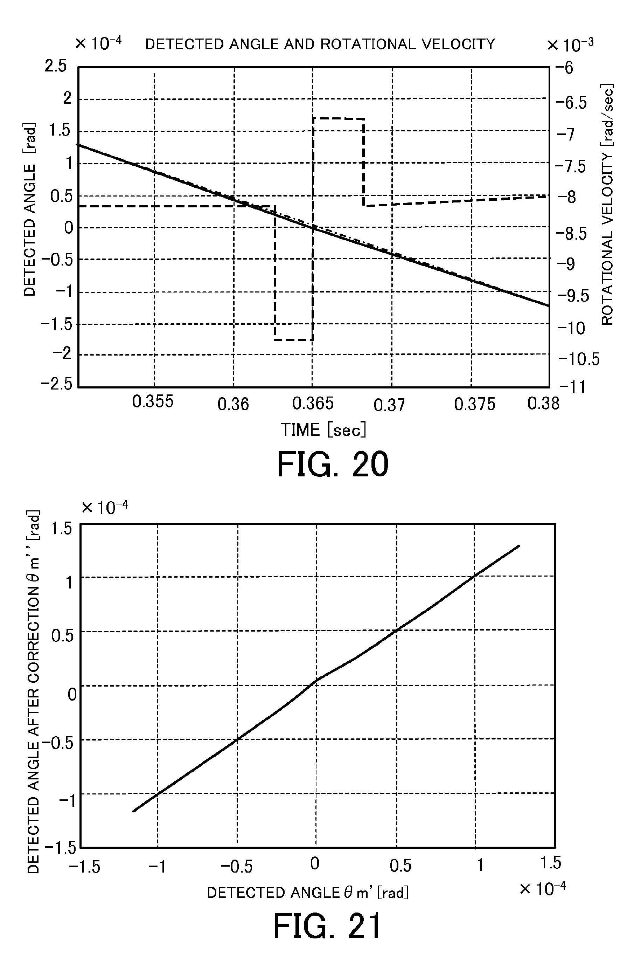

In order that the velocity unevenness of the rotational velocity is equal to zero, in the present embodiment, as shown in Fig. 20 by a dashed-dotted line, the detected angle θm' during the time between 350 [msec] and 380 [msec] (during the time when the velocity unevenness is contained) is linearly approximated. Thus, the relation between the detected angle θm' before the correction and the detected angle θm'' after the correction calculated by the linear approximation can be obtained. This relation is shown in Fig. 21.

The relation between the detected angle θm'' after the correction and the detected angle θm' before the correction shown in Fig. 21 is maintained as a displacement correction table in the motor controller 203 of the motor control apparatus 200.

A detection error before and after correcting angle detection

Next, a detection error before and after correcting angle detection will be described.

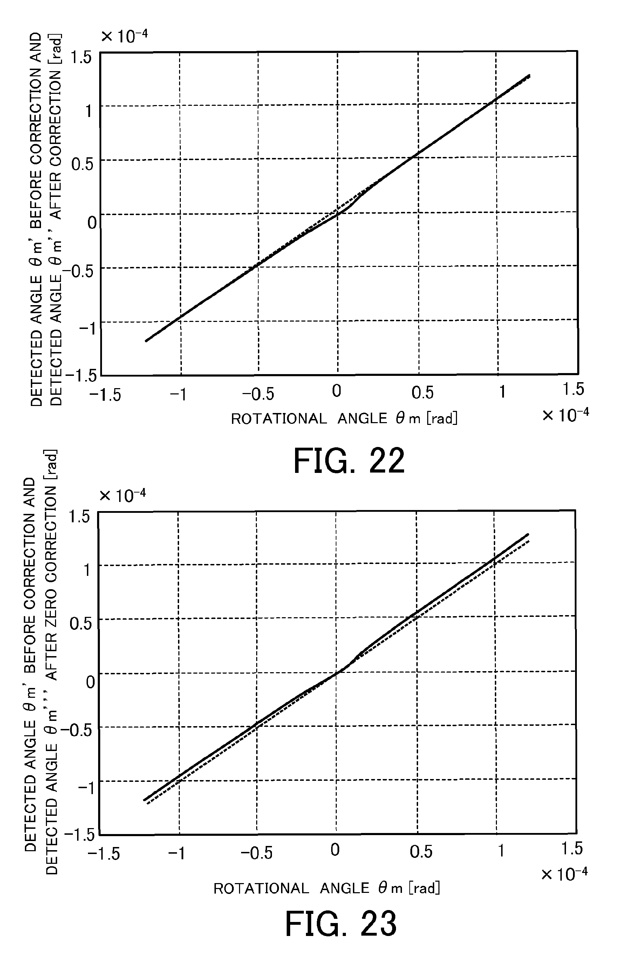

Fig. 22 is a relationship between the detected angle θm' before the correction and the detected angle θm'' after the correction, and the rotational angle θm. In Fig. 22, the horizontal axis represents the rotational angle θm of the motor and the vertical axis represents the detected angle θm' before the correction and the detected angle θm'' after the correction.

The detected angle θm' before the correction is represented by a solid line and the detected angle θm'' after the correction obtained by the linear approximation is represented by a dashed line.

As shown in Fig. 22, when the rotational angle θm of the motor is equal to zero, the detected angle θm'' after the correction is other than zero. Therefore, a zero correction is additionally performed so that the detected angle θm'' after the correction is equal to zero when the rotational angle θm of the motor is equal to zero. The detected angle after the zero correction is defined as θm'''.

Fig. 23 is a relationship between the detected angle θm' before the correction and the detected angle θm''' after the zero correction, and the rotational angle θm. In Fig. 23, the horizontal axis represents the rotational angle θm of the motor and the vertical axis represents the detected angle θm' and the detected angle θm''' after the zero correction. The detected angle θm' is represented by a solid line and the detected angle θm''' after the zero correction is represented by a dashed line.

As shown in Fig. 23, when the rotational angle θm is equal to zero, the detected angle θm''' after the zero correction is also equal to zero. Thus, a displacement correction table of the present embodiment performs the correction so that the rotational angle θm''' (displacement amount) after the correction is equal to zero when the rotational angle θm (displacement amount) of the moving part (motor) is equal to zero.

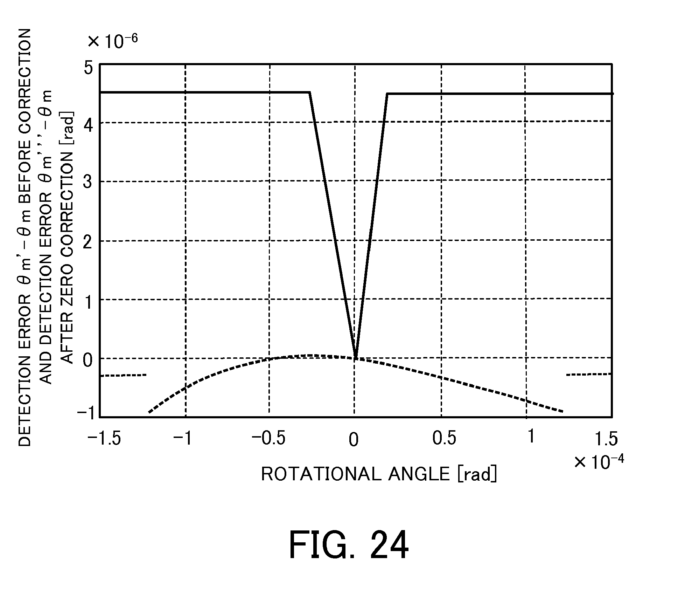

Fig. 24 is a relationship between the detection error θm'-θm before the correction and the detection error θm'''-θm after the zero correction, and the rotational angle θm. In Fig. 24, the horizontal axis represents the rotational angle θm of the motor and the vertical axis represents the detection error θm'-θm before the correction and the detection error θm'''-θm after the zero correction. The detection error θm'-θm before the correction is represented by a solid line and the detection error θm'''-θm after the zero correction is represented by a dashed line.

As shown in Fig. 24, in the range of the correction of the present embodiment, the detection error of the detected angle θm''' after the zero correction is greatly reduced compared with that of the detected angle θm' before the correction.

As described above, according to the present embodiment, an angle detection error for an encoder signal containing a scale process error can be reduced. Furthermore, in the present embodiment, even if the scale pitch of the encoder is heterogeneous, a displacement correction can also be performed by setting a range of an angle or a position containing the heterogeneity.

In a positioning apparatus (a motor control apparatus) of a galvano motor using the correction method in each of the above embodiments, or in a laser processing machine and a processing machine using the motor control apparatus, the division accuracy of the encoder can be easily improved compared with a conventional one.

Therefore, according to each of the above embodiments, the velocity unevenness of the displacement velocity (temporal differentiation of measured position response) of the displacement amount detected by the encoder can be suppressed. As a result, the precise displacement detection can be performed without depending on the amplitude or offset of the outputs signal from the encoder, the phase difference of the two-phase signal, the harmonic component, or the pitch error of the encoder scale.

Therefore, according to each of the above embodiments, a displacement detecting method, a motor control apparatus, and a processing machine which correct the detection error caused by a harmonic component contained in an encoder output signal, a process error of the scale pitch, or the like to improve the detection accuracy can be provided. A method for making a correction table can also be provided. As a result, the performance of the machine can be improved and the quality of the processed object or worked object can be improved.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For example, in each of the above embodiments, a rotary motor (a rotational mechanism) is used as a moving part, but instead of this, a translatory mechanism can also be used. Furthermore, as a drive unit of the moving part, an actuator such as a motor or a piezo, or a hand of a human can be used.

In each of the above embodiment, an encoder is used as a displacement detector, but instead of this, a capacitance sensor or a PSD (Position Sensitive Detector) can also be used. According to the capacitance sensor or the PSD, a linearity correction of the displacement detection can be performed.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

A displacement detecting method of the present invention includes the steps of driving a moving part (3) using a drive unit (1), detecting a displacement amount (6) (detected angle θm') of the moving part (3) using a displacement detector (5), correcting the displacement amount (6) (detected angle θm') using a displacement correction table so that a displacement velocity (dθm'/dt) of the displacement amount (6) (detected angle θm') detected by the displacement detector (5) is constant, and detecting a displacement amount (detected angle θm") corrected by the displacement correction table as the

## Claims

1. A displacement detecting method comprising the steps of:

   driving a moving part (3) using a drive unit (1);
   detecting a displacement amount of the moving part (3) using a displacement detector (5);
   correcting the displacement amount using a displacement correction table so that a displacement velocity (8) of the displacement amount detected by the displacement detector (5) is constant; and
   detecting a displacement amount corrected by the displacement correction table as the displacement amount of the moving part (3).

2. A displacement detecting method according to claim 1,
   **characterized in that**
   the displacement velocity (8) of the displacement amount has a periodic velocity unevenness, and
   the displacement correction table performs a correction so that the displacement velocity (8) is constant during at least one period of the velocity unevenness.

3. A displacement detecting method according to claim 1,
   **characterized in that**
   the displacement correction table performs a correction so that the displacement amount after the correction is equal to zero when an actual displacement amount (4) of the moving part (3) is equal to zero.

4. A method for making a correction table comprising the steps of:

   driving a moving part (3) using a drive unit (1);
   detecting a displacement amount of the moving part (3) using a displacement detector (5);
   calculating a displacement velocity (8) of the displacement amount using a differentiator (7); and
   making a displacement correction table configured to correct the displacement amount so that the displacement velocity (8) of the displacement amount detected by the displacement detector (5) is constant.

5. A motor control apparatus (200) comprising:

a moving part (3);

a drive unit (1) configured to supply a drive torque to the moving part (3);

a displacement detector (5) configured to detect a displacement amount of the moving part (3); and

a controller (203) having a displacement correction table configured to correct the displacement amount so that a displacement velocity (8) of the displacement amount detected by the displacement detector (5) is constant, **characterized in that** the controller (203) controls the drive unit (1) using a displacement amount corrected by the displacement correction table.

6. A motor control apparatus (200) according to claim 5,
   **characterized in that**
   the displacement velocity (8) of the displacement amount has a periodic velocity unevenness, and
   wherein the displacement correction table corrects the displacement amount so that the displacement velocity (8) is constant during at least one period of the velocity unevenness.

7. A motor control apparatus (200) according to claim 5,
   **characterized in that** the displacement correction table performs a correction so that the displacement amount after the correction is equal to zero when an actual displacement amount of the moving part (3) is equal to zero.

8. A motor control apparatus (200) according to any one of claims 5 to 7,
   **characterized in that** the displacement detector (5) is an encoder (201, 202).

9. A processing machine (100) comprising a motor control apparatus (200) according to any one of claims 5 to 8.

FIG. 1

DETECTION ERROR OF MOTOR
HAVING ENCODER CONTAINING HARMONIC COMPONENT

FIG. 2

DETECTION ERROR OF MOTOR
BY ENCODER SIGNAL CONTAINING HARMONIC COMPONENT

FIG. 3

## DRIVE TORQUE

FIG. 4

FIG. 5

FIG. 6

FIG. 7

FIG. 8

FIG. 9

×10⁻⁴   DETECTED ANGLE AND ROTATIONAL VELOCITY   ×10⁻³

**FIG. 10**

×10⁻⁶   DETECTED ANGLE AND ROTATIONAL VELOCITY   ×10⁻⁴

**FIG. 11**

$\times 10^{-6}$　DETECTED ANGLE AND ROTATIONAL VELOCITY　$\times 10^{-4}$

FIG. 12

FIG. 13

FIG. 14

DETECTION ERROR OF MOTOR HAVING SCALE PROCESS ERROR

FIG. 15

DETECTION ERROR OF MOTOR HAVING SCALE PROCESS ERROR

FIG. 16

DRIVE TORQUE

FIG. 17

×10⁻³  DETECTED ANGLE AND ROTATIONAL VELOCITY

FIG. 18

×10⁻⁴  DETECTED ANGLE AND ROTATIONAL VELOCITY  ×10⁻³

FIG. 19

×10⁻⁴   DETECTED ANGLE AND ROTATIONAL VELOCITY   ×10⁻³

FIG. 20

×10⁻⁴

FIG. 21

FIG. 22

FIG. 23

FIG. 24

START

DRIVE MOVING PART BY DRIVE UNIT — S1

DETECT DETECTED ANGLE AND
TEMPORAL DIFFERENTIATION VALUE
(ROTATIONAL VELOCITY) AS RESPONSE
AT THE TIME OF DRIVE — S2

DETERMINE VELOCITY UNEVENNESS RANGE — S3
(CORRECTION RANGE)

CALCULATE CORRECTION ANGLE
FROM DETECTED ANGLE
SO THAT VELOCITY UNEVENNESS IS EQUAL
TO ZERO IN VELOCITY UNEVENNESS RANGE — S4

END

# FIG. 25

FIG. 26

FIG. 27

FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02138819 A

- JP H0658769 A